# EUROPEAN PATENT APPLICATION

(11) **EP 2 958 033 A1**
(43) Date of publication of application: **23.12.2015**
(21) Application number: 15173125.4
(22) Date of filing: 22.06.2015
(51) Int. Cl.: G06F 17/30

(54) **TILE-BASED DISTRIBUTION OF SEARCHABLE GEOSPATIAL DATA TO CLIENT DEVICES**

(30) Priority: 21.06.2014 US 201462015428 P
(71) Applicant: Google Inc., Mountain View, CA 94043 (US)
(72) Inventor: Maurer, Jennifer, Mountain View, CA 94043 (US); Zauharodneu, Ivan, 8002 Zürich (CH); Wang, Ting-You, Mountain View, CA 94043 (US)
(74) Representative: Grant, David Michael

(57) **Abstract**

The memory of a user device stores map data for rendering a digital map of a geographic area. The memory also stores searchable geospatial data organized into tiles. Each tile corresponds to a respective portion of the geographic area of a substantially same size. The geospatial data includes, for each of the tiles, descriptions of one or more geographic entities and a location of the one or more geographic entities, within the corresponding portion of the geographic area. The processing hardware of the user device is configured to (i) display the digital map via the user interface, (ii) receive the map data and the searchable geospatial data from the map data server, in the online mode, (iii) receive a geographic query pertaining to the geographic area, and (iv) execute the geographic query using the geospatial data stored in the computer-readable memory.

## Description

### FIELD OF TECHNOLOGY

This disclosure relates to interactive digital maps and, more particularly, to providing geospatial data to client devices for offline use.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Software applications that provide interactive digital maps ("mapping applications") can operate on computing devices that generally have a permanent network connection as well as on portable devices such as smartphones, tablet computers, car navigation systems, etc. A mapping application typically receives a user query specifying a geographic location, obtains a digital map from a network server, and provides the digital map via a user interface. Moreover, mapping applications often provide additional geospatial data related to areas, such as a listing of businesses located in the area visible in the viewport.

### SUMMARY

To allow users to search for geospatial data on a portable device in an offline mode, a mobile mapping application of this disclosure caches searchable geospatial data received from a network server in an online mode. Thus, when a network connection becomes unreliable or completely unavailable, the user can continue to search for points of interest, businesses, recommendations, and other content using the cached data. In an exemplary embodiment, the mobile mapping application can receive searchable geospatial data in the form of tiles describing equal portions of a geographic area. These tiles can be referred to below as "geospatial data tiles." To facilitate efficient searching, the mobile mapping application can index the searchable geospatial data and cache the indexed data upon receiving the geospatial data from the network server.

More specifically, one embodiment of these techniques is a user device including a user interface, a network interface to couple the user device to a map data server via a communication network, in an online mode, and a computer-readable memory. The memory stores map data for rendering a digital map of a geographic area. The memory further stores and searchable geospatial data organized into multiple tiles, each tile corresponding to a respective portion of the geographic area of a substantially same size. The geospatial data includes, for each of the tiles, descriptions of geographic entities and locations of the geographic entities within the corresponding portion of the geographic area. The processing hardware of the user device (e.g., one or more processors) is configured to (i) display the digital map via the user interface, (ii) receive the map data and the searchable geospatial data from the map data server, in the online mode, (iii) receive a geographic query pertaining to the geographic area, and (iv) execute the geographic query using the geospatial data stored in the computer-readable memory.

In some embodiments, the searchable geospatial data includes, for each of the plurality of tiles, (i) a respective plurality of searchable terms and (ii) indications to which of the geographic entities corresponding to the tile each of the searchable terms pertains.

In some embodiments, the processing hardware is further configured to apply an indexing technique to the geospatial data to generate indexed geospatial data, wherein the indexed geospatial data associates a common key with a subset of the plurality of geographic entities to which a same one of the plurality of searchable terms pertains.

In some embodiments, the indexed geospatial data associates the common key with geographic entities corresponding to different ones of the plurality of tiles.

In some embodiments, the plurality of searchable terms include business type identifiers.

In some embodiments, the processing hardware is configured to: receive the geographic query via the user interface, the geographic query including one or more of the plurality of search terms, and execute the geographic query based on the received one or more of the plurality of searchable terms.

In some embodiments, he processing hardware is configured to receive the geographic query pertaining to the geographic area and execute the geographic query when the user device is in an offline mode.

In some embodiments, the processing hardware is further configured to: receive updated geospatial data for one of the plurality of tiles from the map data server; generate updated indexed geospatial data using the updated geospatial data and the geospatial data corresponding to the tiles in the plurality of tiles other than the one of the plurality of tiles.

In some embodiments, the plurality of tiles into which the searchable geospatial data is organized corresponds to a first zoom level, and the map data is organized into a plurality of map tiles corresponding to a second zoom level different from the first zoom level.

Another embodiment of these techniques is a method which can be executed by one or more processors of a user device. The method includes receiving, via a communication network, searchable geospatial data organized into tiles, each tile corresponding to a respective portion of a geographic area of a substantially same size, such that the searchable geospatial data includes descriptions of geographic entities and indications of locations of the geographic entities within the corresponding portions of the geographic area. The method also includes indexing the geospatial data using the descriptions of the geographic entities and the locations included in the tiles to generate indexed geospatial data, storing the indexed geospatial data in a cache implemented in the client device, and executing a query related to the geographic area using the indexed geospatial data stored in the cache.

In some embodiments, the descriptions of geographic entities include, for each geographic entity, an indication to which of a plurality of searchable terms the geographic entity corresponds.

In some embodiments, indexing the searchable geospatial data includes generating, by the one or more processors, common keys for geographic entities for which the searchable indicates one or more searchable terms.

In some embodiments, the method comprises receiving, by the one or more processors via a user interface, a geographic search query including one or more of the plurality of search terms, and executing the geographic query based on the received one or more of the plurality of searchable terms.

In some embodiments, executing the query related to the geographic area using the indexed geospatial data stored in the cache includes executing the query when the user device operates in an offline mode.

In some embodiments, the method comprises: receiving updated geospatial data for one of the plurality of tile from the map data server; re-indexing the geospatial data using the updated geospatial data and the geospatial data corresponding to the remaining ones of the plurality of tiles.

In some embodiments, the method further comprises: receiving, by the one or more processors via the communication network, map data for rendering a digital map of the geographic area, wherein the map data is organized into map tiles having same dimensions as the tiles into which the searchable geospatial data is organized; and storing, by the one or more processors, the map data in the cache.

In some embodiments, the tiles into which the searchable geospatial data is organized correspond to a first zoom level; and the method further comprises: receiving, by the one or more processors via the communication network, map data for rendering a digital map of the geographic area, wherein the map data is organized into map tiles corresponding to second zoom level different from the first zoom level; and storing, by the one or more processors, the map data in the cache.

Yet another embodiment of these techniques is a method for facilitating geographic queries on user devices. The method includes generating, by one or more computing devices, map data for rendering a digital map of a geographic area on a client device, including generating descriptions of geometries to be rendered as part of the digital map. The method also includes generating, at the one or more network servers, searchable geospatial data that includes descriptions of geographic entities within the searchable geographic area and respective locations of the entities, including organizing the geospatial data into a plurality of tiles, each of the plurality of map tiles corresponding to a respective portion of the geographic area of a substantially same size. Further, the method includes providing the map data and the geospatial data to a user device via a communication network, where the user device executes geographic queries pertaining to the geographic area using the geospatial data.

In some embodiments, generating the geospatial data includes, for each of the plurality of tiles, providing a plurality of search terms and indications to which of the plurality geographic entities the searchable terms pertain.

In some embodiments, generating the geospatial data includes providing one or more common search terms for geographic entities associated with different tiles.

In some embodiments, the method further comprises: detecting a change in searchable geographic area related to a portion of the geographic area that corresponds to a certain tile included in the plurality of tiles; generating updated searchable geospatial data for the certain tile; and providing the updated searchable geospatial data for the certain tile to the user device.

In some embodiments, generating the map data includes organizing the map data into a plurality of map tiles at a first zoom level, wherein the plurality of tiles into which the searchable geographic area is organized corresponds to a second zoom level different from the first zoom level.

In some embodiments, the user device executes geographic queries pertaining to the geographic area using the geospatial data when operating in an offline mode.

### BRIEF DESCRIPTION OF THE DRAWINGS

Fig. 1 is a block diagram of an example system in which a network server provides searchable geospatial data, organized into tiles, to a client device for offline use;
Fig. 2 is a block diagram of an example client device that can operate in the system of Fig. 1;
Fig. 3 is message flow diagram of an example scenario in which the client device of Fig. 1 receives searchable geospatial data from the network server in an online mode, indexes the received geospatial data, and stores the indexed geospatial data in cache for subsequent offline use;
Fig. 4 is a message flow diagram of an example scenario in which the network server of Fig. 1 provides a tile with updated geospatial data to a client device;
Fig. 5 is a flow diagram of an example method for providing searchable geospatial data to a client device, which can be implemented in the network server of Fig. 1;
Fig. 6 is a flow diagram of an example method for generating indexed geospatial data using tile-based geospatial data received from a network server, which can be implemented in the client device of Fig. 1; and
Fig. 7 is a flow diagram of an example method for re-generating indexed geospatial data using a tile with updated geospatial data and some of the previously stored tiles, which also can be implemented in the client device of Fig. 1.

### DETAILED DESCRIPTION OF THE DRAWINGS

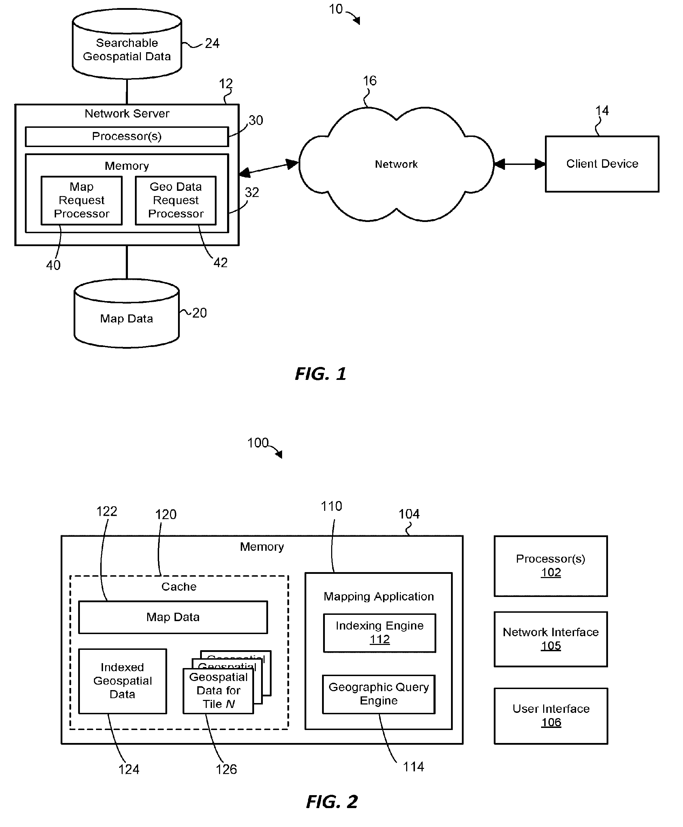

Fig. 1 illustrates an example system 10 in which a network server 12 provides to a client device 14 searchable geospatial data organized into tiles, so as to facilitate geographic queries on the client device 14 in an offline mode. The client device 14 then uses the received geospatial data to build a search index (or simply "index") to execute offline search queries quickly and efficiently. To this end, the client device 14 can use any suitable indexing technique. In general, searchable geospatial data can include listings of points of interests, businesses, neighborhoods, user-specific markers, etc. and the corresponding location for a certain tile. The searchable geospatial data also can include various additional terms for places, such as "price range between $20 and $30," "open between 11:00 pm and 6:00 pm," "cinema," etc., using which the client device 14 can build the index. More particularly, the client device 14 can use a set of tiles available for a geographic area and a set of search terms to build an index for that area, so that a single query can be executed for multiple tiles.

When the client device 14 operates in the offline mode, a network connection at client device 14 may be unavailable, or the network connection may be unreliable or of a poor quality. Further, the user of the client device 14 can explicitly activate the offline mode when boarding a plane, for example.

For simplicity, Fig. 1 illustrates only one instance of a network server 12. However, the network server 12 in other implementations can include multiple servers capable of communicating with each other, arranged according to any suitable topology. Similarly, the system 10 in general can include any number of client devices 14. As illustrated in Fig. 1, the network server 12 and the client device 14 are communicatively coupled via a communication network 16, which can be any suitable network including wired and/or wireless links.

The server 12 can include processing hardware such as one or more processor(s) 30 coupled to a memory 32, which can include persistent and/or non-persistent components. A map request processor 40 and a geospatial data request processor 42 can be implemented as sets of instructions stored in the memory 32 and executed on the one or more processor(s) 30. In operation, the components 40 and 42 can provide to the client device 14 map data for rendering a digital map of a geographic areas and data describing various entities disposed in the geographic area, respectively.

The server 12 is coupled to a map database 20, which can be implemented in one or several servers (or, if desired, as a component of the network server 12). The map database 20 can store descriptions of geometry and location indications for various natural geographic features (e.g., rivers, mountains, forests) as well as artificial geographic features (e.g., roads, buildings, parks). The map data can include, among other data, vector graphics data, raster image data, and text data.

In an example implementation, the map database 20 organizes map data into map tiles, which generally correspond to a two-dimensional organization of geospatial data into traversable data structure, such as a quadtree, other tree data structure, any other suitable data structure, or any combination thereof. Each map tile in this case corresponds to a square geographic region, with the size of the square being dependent on the level of magnification, or zoom level. Map tiles at the same level of magnification can be of the substantially same size. Thus, each map tile at a given zoom level is divided into four tiles at the next level, up to the highest zoom level. The map request processor 40 can receive, from the client device 14, a request for a certain location or area and an indication of the desired zoom level, identify a set of map tiles necessary for rendering a digital map of the corresponding area at the specified zoom level, and transmit the map tiles to the client device 14.

Map tiles can be in a vector-based format, according to which geometric shapes are described mathematically rather than in terms of pixels. Alternatively or additionally, map tiles also can include text labels and raster (bitmap) imagery.

With continued reference to Fig. 1, the server 12 also can access a searchable geospatial database 24 which stores information regarding various points of interest (e.g., monuments, museums, landmark buildings), businesses (e.g., restaurants, hotels, stores), train stations and bus stops, boundaries of neighborhoods, and other geographic entities. Descriptions of geographic entities can include any number of search terms based on which the data can be indexed or otherwise organized for quick search and retrieval. The search terms can include a street address that in turn includes a number, a street, a city, a state, etc. Further, a description of a restaurant, for example, can include search terms describing the business type ("restaurant"), the type of food (e.g., "American," "French," "fast food"), the atmosphere (e.g., "casual," "formal"), the price range ("$20 - $30," less than $10," "$50 and above") or actual prices for some of the items, etc. in addition to location data such as geographic coordinates or street addresses. Other examples of suitable business type identifiers can include such as terms as "hotel," "gas station," "grocery store," etc.

The geospatial database 24 can organize geospatial data into tiles that are generally similar to the map tiles in the map database 20. Thus, each tile can include searchable geospatial data pertaining to the geographic area covered by the tile. The geospatial data request processor 42 can receive a request for searchable geospatial data from the client device 14, identify relevant tiles, and provide the tiles to the client device 14 for immediate use or caching, or storing in a certain region of the memory of the client device 14 for subsequent one-time or repeated use. The client device 14 then can index the geospatial data to prepare the searchable geospatial data for subsequent queries. In an additional or alternative implementation, the processor 42 can provide already-indexed data to the client device 14.

The geospatial request processor 42 can provide an identifier of the position of the tile within a tile grid as part of the geospatial data or along with the geospatial data. For example, the geospatial request processor 42 can indicate that a certain tile should be centered, or otherwise positioned in relation to, at Global Positioning Service (GPS) coordinates (x₁, y₁), another tile should be centered at coordinates (x₂, y₂), etc. Alternatively, the geospatial request processor 42 can indicate that a certain tile should be placed in cell (a₁, b₁) in a tile grid, another tile should be placed in cell (a₂, b₂), etc.

In general, the system 10 can include processing hardware of any suitable type, configured to implement the techniques of this disclosure. The processing hardware can include one or more processors on one or more computing devices, one or more servers, a distributed network, etc.

Fig. 2 is a block diagram illustrating an example implementation of the client device 100, for example, which may correspond to the client device 14 of Fig. 1. The client 14 may be a desktop computer, a laptop computer, a smart phone, a tablet computer, another suitable computing device, or any combination thereof. In some scenarios, the same user uses two client devices 14, such as a smartphone and a tablet computer, and the data 124 and 126 is synchronized across the two or more devices. The client device 14 includes processing hardware such as one or more processor(s) 102, a computer-readable memory 104, a computer network interface 105, and a user interface 106. In some implementations, the one or more processor(s) 102 include a central processing unit (CPU) as well as a graphics processing unit (GPU) for efficiently rendering graphics content. The user interface 106 can include such components as, for example, a screen, a touchscreen, a keyboard, a microphone, one or more speakers, etc. The memory can 104 can be a non-transitory memory including persistent (e.g., flash drive) and/or non-persistent (e.g., RAM) components.

The memory module 104 stores instructions that implement a mapping application 110, which can be a special-purpose mapping application or a general-purpose application such as a web browser that includes a mapping application programming interface (API), for example. The memory module 104 also implements a cache 120 as a certain dedicated memory region, for example, for storing map data 122 and tile-based geospatial data 126. The mapping application 110 implements an indexing engine 112 configured to build indexed geospatial data (or simply, the "search index") 124 using the tile-based geospatial data 126. The indexing engine 112 in various implementations and/or scenarios can index both geospatial and non-geospatial data to generate an index that stores geospatial along with non-geospatial data. The mapping application 110 also implements a geographic query engine 114 configured to execute geographic queries received from the user, such as "gas stations nearby" or "fast food in Manhattan," or from the mapping application 110 as part of an auto-suggest routine.

As a more specific example, the indexing engine 112 can process the searchable geospatial data 126 for several tiles T₁, T₂, ... T_{N} to generate Table 1 below. Various search terms, such as "food" or "gas," can operate as keys in Table 1, and table entries can list geographic entities matching these criteria. Thus, a common key, such as "cinema," can correspond to several geographic entities sharing one or several search terms. The locations of the geographic entities can be stored in the same table entries or in a separate table, depending on implementation.

**Table 1**

| **SEARCH TERM** | **GEOGRAPHIC ENTITIES** |
|---|---|
| Cinema | Place P1, Place P2, Place P3 |
| Open late | Place P1 |
| Italian | Place P5, Place P6 |

Depending on the implementation, the indexing engine 112 can generate tables for various regions, such as Region R₁ made up of tiles T₁, T₂, and T₃ and region R₂ made up of tiles T₃, T₄, T₅, and tiles T₆, or a common table for the entire geographic area covered by the available geospatial data 126. Regions, such as R₁, R₂, ... R_{N} may be distinct, overlapping, subsets of one another, have any other suitable comparative relationships, or any combination thereof.

More generally, the indexing engine 112 can implement any suitable techniques to parse geospatial content and build a search index. Thus, depending on the implementation, the indexing engine 112 can generate a suffix tree, a document-term matrix, an inverted index, etc. Indexing may include natural language processing, keyword frequency, link-mapping, etc.

The network server 12 can provide the geospatial data 126 with the search terms being consistent across tiles. In other words, a search term being used as a common key, such as "restaurant" or "$10," can be used to search for data in multiple tiles. In this manner, the indexing engine 112 can build the indexed geospatial data 124 using a group of tiles for any geographic area. More specifically, a table such as Table 1 can include descriptions of geographic entities disposed in areas corresponding to different tiles but sharing one or more search terms. Further, as discussed below, the indexing engine 112 can re-generate the indexed geospatial data 124 upon receiving updated geospatial data for tile T_{L}, using the updated geospatial data and some of the geospatial data 126.

In one embodiment, the mapping application 110 aligns and synchronizes map data 122 and geospatial data 126. More particularly, the mapping application 110 obtains map data and geospatial data for same geographic areas so as to allow the user to search within the areas displayed on digital maps and, conversely, view a map of the geographic area for which the user submitted a geographic query. According to this embodiment, when the mapping application 110 purges the cache 120 of some or all of the map data 122 (e.g., to make room for new data), the mapping application 110 also removes those of the geospatial data tiles 126 that correspond to the same geographic area as the removed map tiles.

However, if desired, the mapping application 110 can be configured to select the geospatial data 126 at a certain fixed zoom level independent of the zoom level of the map data 122. For example, the mapping application 110 can be configured to retrieve geospatial data 126 at zoom level Zₙ and use this data when the user is viewing the digital map at zoom level Zₙ₋₁, zoom level Zₙ, zoom level Zₙ₊₁, etc.

In an example scenario, the mapping application 110 retrieves map data for generating a digital map of an amusement park and the surrounding geographic area. The map data describes various geographic feature such as roads, building footprints or three-dimensional shapes, lakes and rivers, entrances, etc. The mapping application 110 can retrieve, for example, nine map tiles at zoom level Zₙ. The mapping application 110 also can retrieve geospatial data including information about rides within the park, food and souvenir vendors, emergency services, etc. The mapping application 110 can retrieve these geospatial data tiles at zoom level Zₙ₊₁. In this example scenario, the mapping application 110 aligns the map data with the geospatial data, at least for this geographic region. Accordingly, to retrieve geospatial data corresponding to the area covered by the N tiles at zoom level Zₙ, the mapping application 110 application can request *X* geospatial geospatial Zₙ₊₁ data tiles for each Zₙ map tile, to retrieve *X***N* geospatial data tiles.

For a certain geographic area, the mapping application 110 can retrieve geospatial data at several zoom levels, depending on the measured or estimated density of available information at the corresponding portion of the geographic area. For example, when the geographic area includes a densely populated urban area and a sparsely populated rural area, the mapping application 110 can retrieve geospatial data at zoom level Zₙ for the urban area and geospatial data at zoom level Zₙ₋₁ for the rural area. As another example, the mapping application 110 can retrieve geospatial data at a lower zoom level for bodies of water. Because geospatial data at lower zoom levels in general is more compact, the mapping application 110 can utilize the memory 104 more efficiently by varying the zoom level of geospatial data according to density. On the other hand, the mapping application 110 can ensure that the geospatial data more thoroughly covers the potentially "interesting" portions of the geographic area.

The server 12 (or another suitable component of the system 10) can approximately measure the density of available geospatial information in a certain area by counting one or more of the number of points of interest available at a certain zoom level, the number of reviews submitted for places in the area, the number of search requests related to the area, etc. In some cases, the server 12 can estimate the density of available information in an indirect manner, such as by determining the density of population reported for the area, for example.

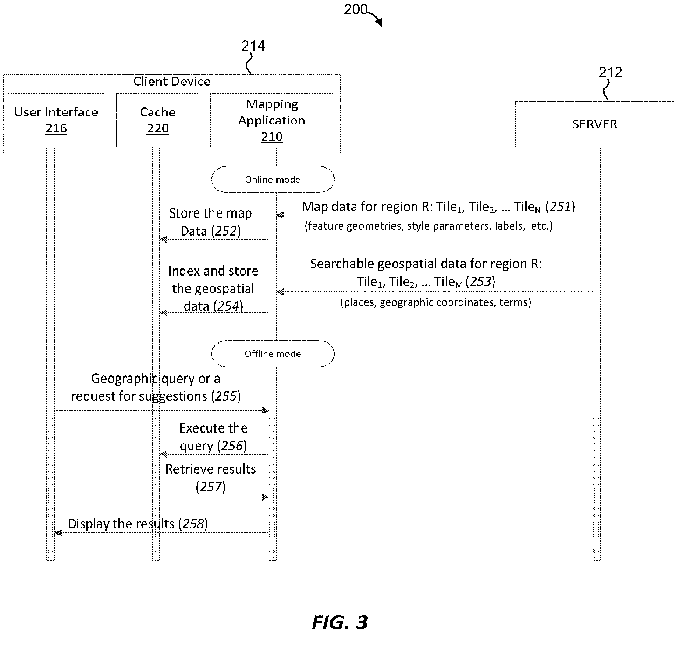

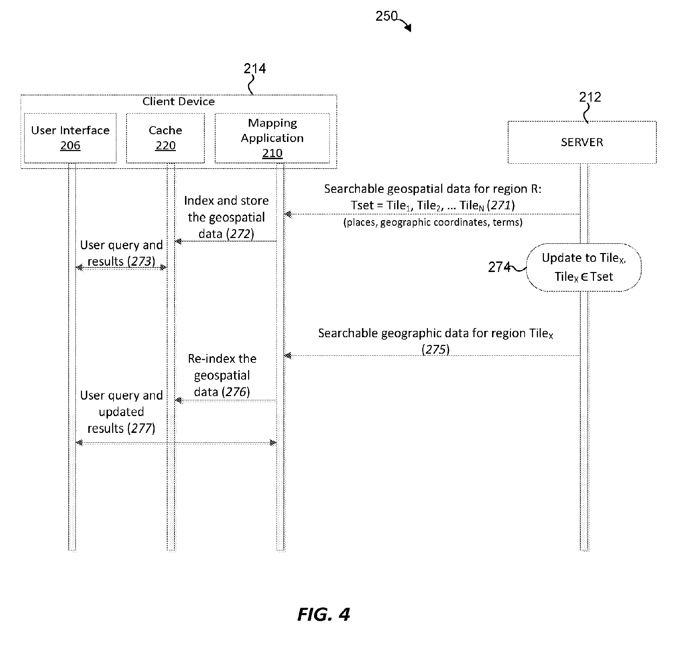

For additional clarity, Figs. 3 and 4 illustrate several example scenarios according to which a client device 214 can obtain from a network server 212, and cache, geospatial data. The client device 214 can correspond to the client device 14 of Fig. 1 and/or the client device 100 of Fig. 2, for example. Further, a mapping application 210, a user interface 216, and a cache 220 can correspond to the mapping application 110, the user interface 116, and the cache 120, respectively. The server client 212 can correspond to the network server 12. In these figures, each vertical line schematically represents the timeline of the corresponding component, with events depicted lower on the page occurring after the events depicted higher on the page. The flow of information between the components is represented by arrows. An arrow in different situations can represent a message propagated between different physical devices, a message propagated between tasks running on the same device, a function call from one software layer to another software layer, a callback function invoked in response to a triggering event, etc. Further, a single arrow in some cases can represent a sequence of function calls and/or messages. Still further, the blocks labeled "online" and "offline" indicate the states when the mapping application 210 has a sufficiently reliable network connection and when the mapping application 210 does not have a sufficiently reliable network connection, respectively.

Referring first to Fig. 3 illustrating a scenario 200, the network server 212 provides map data for region R in the form of map tiles (event 251), while the client device 214 operates in the online mode. The network server 212 can provide the map in response to a request for from the mapping application, which in turn can be generated in response to a request received via the user interface 206 or automatically. For example, the user can request a digital map of Seattle, WA for immediate viewing. In another case, the user can operate a control to request that map data for Seattle, WA be prefetched for a later use, when the user expects the client device 214 to operate in the offline mode. In yet another case, the mapping application 210 can automatically determine that map data for Seattle, WA should be prefetched in view of the estimated probability that the user will wish to view such a map later, and the probability that no network connection will be available at that time.

The map tiles in an example implementation include vector-based descriptions of geographic features, such as roads, buildings, bodies of water, and forested areas. The map tiles also can include text labels and raster (bitmap) imagery. The network server 212 can provide, with every map tile, an indication of a location to which the map tile corresponds, so that the map application 210 can assemble a digital map from multiple map tiles. The network server 212 can provide similar indications for the tiles with geospatial data discussed below. The mapping application 210 stores the received map tiles in the cache 220 (event 252).

The network server 212 can also provide searchable geospatial data for the region R, also organized into tiles (event 253). As indicated above, these tiles can include descriptions of points of interest and, more generally, one or more various geographic entities in the region R, as well as indications of locations of these entities. Depending on the implementation, configuration, and/or data availability, the tiles also can include user reviews, detailed description of places, various tags or search terms provided for geographic entities (e.g., "business name = Bob's Auto Service; search terms = "auto service," "car repair," "tune-up," ... "). In the example scenario involving the map of Seattle mentioned above, the network server 212 can provide geospatial data for Seattle, covering approximately or exactly the same region. In general, the searchable geospatial can be provided at any desired level of detail. To make the geospatial content in the tiles machine-readable, the network server 212 can format the geospatial data using the extended mark-up language (XML) standard or and/another suitable scheme for organizing data.

As a more specific example, for the business Bob's Auto Service mentioned above, the available geospatial data can be mapped to multiple zoom levels, according to one embodiment. For example, a relatively small amount of data can correspond to zoom level Zₙ and include the name of the business and GPS coordinates of the business. A more robust set of data can correspond to higher-magnification zoom level Zₙ₊₁ and include additional search terms, such as "automotive" and "car repair." At yet another zoom level Zₙ₊₂, the geospatial data can include hours of operation, prices or price ranges, user reviews, and other data which can be indexed at a client device. The network server 212 can select the level in accordance with the zoom level of the corresponding digital map, a certain fixed zoom level as discussed above, an automatic determination in view of the amount of overall data to be transmitted, user preferences, other principles, or any combination thereof.

The network server 212 generally can select the zoom level for map tiles (event 251) in accordance with the request from the mapping application 210. The network server 212 can select the zoom level for tiles carrying searchable geospatial data by matching the zoom level of the map tiles. Alternatively, the network server 212 can select the zoom level for these tiles independently of the zoom level of the map tiles. As one example, the network server 212 can be configured to always provide the tiles with geospatial data at a certain zoom level *L₁* = Zₙ. When the mapping application 210 requests map data at zoom level *L₂* = Zₙ₋₁, the network server 212 provides *N* map tiles at the specified zoom level *L₂* = Zₙ₋₁ but provides *M* tiles with geospatial data at the zoom level *L₁* = Zₙ, for the same geographic area covered by the provided map tiles. Because the area corresponding to one tile at zoom level Zₙ₋₁ can be subdivided into four equal areas covered by tiles at zoom level Zₙ, the network server 212 provides *M=* 4**N* tiles with geospatial data. As another alternative, the network server 212 can select the zoom level in view of the type of the geographic area covered by the tile. For example, the network server 212 can provide tiles at higher zoom levels (so as to accommodate more detail) for urban areas.

The tiles with geospatial data also can be versioned for subsequent management. More specifically, the network server 212 can include, for each tile, an identifier of the version of the tile or a timestamp, for example. The mapping application 210 can store the identifier along with the tile, so that tiles with searchable geospatial data can be aged out of the cache 220, correctly and timely replaced with newer versions, etc. More particularly, in an example implementation, the mapping application 110 can determine when certain portions of the map data should be deleted from the cache 220 based on such example signals as explicit user commands, the amount of remaining available memory, and expected future use of these portions. The expected future use of map data in turn can be determined based on such signals as whether the corresponding geographic area is near the user's home, place of work, or places the user frequently visits. As another example, the expected future use of map data can depend on the estimated likelihood the user is visiting the corresponding geographic area on a one-time or otherwise infrequent trip. In some implementations, the user operates certain controls and/or installs certain applications to allow the mapping application 110 to automatically make these determinations.

With continued reference to Fig. 3, the mapping application 210 can index the received geospatial data and store the indexed data in the cache 220 (event 254). The mapping application 210 can parse the geospatial data and utilize any suitable indexing technique to generate a data structure using which a search term, or a combination of search terms, can be used to quickly retrieve names and locations of geographic entities matching the search term(s). For example, the mapping application 210 can create an entry in an inverted index table (similar to Table 1 discussed above) for a search term T, select a group of tiles for a geographic area, iterate through the group of tiles to find each geographic entity whose description in the geospatial data includes the term *T*, and add the geographic entity to the inverted index table. As discussed in more detail with reference to Fig. 4, the mapping application 210 can utilize one or more tiles received as part of the event E3 as well as one or more tiles already stored in the cache 220.

When the client device 214 operates in the offline mode, the mapping application 210 can receive a geographic query related to region R and/or a request for automatic suggestions (event 255). In response, the mapping application 210 in this scenario executes the geographic query using the cached, indexed geospatial data (event 256). After retrieving the results (event 257), the mapping application 210 can display the results over a digital map of the region R (event 258). The mapping application 210 can provide the results on the digital map in the same manner as providing the results in the online mode, but in some implementations the mapping application 210 can provide additional notification to the user to indicate that the results were obtained in the offline mode.

Now referring to Fig. 4, the client device 214 in an example scenario 250 receives searchable geospatial data for region *R* (event 271), indexes the received data and stores the indexed geospatial data in the cache 220 (event 272), and uses the geospatial data in the cache 220 to execute search queries (event(s) 273), similar to the scenario 200 discussed above with reference to the events in Fig. 3. The server 212 then determines that geospatial data corresponding to tile Tₓ, included in the set of tiles provided to the client device 214 earlier, has been updated (event 274).

Upon determining that a tile with geospatial data should be updated at the client device 214, the network server 212 provides the searchable geographic data for the tile Tₓ to the client device 214 (event 275). The mapping application 210 then generates a new index using one or more of the tiles with geospatial data already stored in the cache 220 and the newly received tile (event 276). The mapping application 210 uses the new indexed geospatial data to process subsequent queries (event(s) 277). Thus, the mapping application 110 can generate indexed geospatial data using multiple tiles generated at different times.

The events 274 and 275 can occur at any time after the events 272 and 273, such as three hours later or twenty hours later. For example, an automatic process that runs daily at a certain time updates tile Tₓ with new data. An hour later, the server 212 can provide the new searchable geographic data for the tile Tₓ to the client device 214 in response to a request for updates or automatically according to a predefined schedule. The server 212 can provide the new data in a push (i.e., server-driven) or a pull (i.e., client-driven) manner, depending on the implementation.

It is also noted that, to update certain geospatial data on the client device 214, the network server 212 need not resend the entire set of geospatial data for a relatively large geographic area, and instead can update only one or several individual tiles. For example, the network server 212 can determine that the latest geospatial data corresponding to tiles T₁, T₂, and T₃ has version number V₁ having the time-stamp T₁, while geospatial data corresponding to tiles T₄, and T₅ has a newer version number V₂ having the more recent time-stamp T₂. The network server 212 can further determine, based on the information stored on the client device 214 or the server 212, that the version of each of the geospatial data tiles T₁ - T₅ is V₁. In response, the network server 212 can provide the geospatial data for tiles T₄, and T₅ according to version V₂, without also resending the geospatial data for tiles T₁ - T₃, so as to cover the geographic area corresponding to tiles T₁ - T₅ with current geospatial data. In this manner, the client device 214 and the network server 212 can gradually update the cache 220 without transmitting a large amount of data at once. Moreover, to increase the coverage of geospatial area at the client device 214, the network server 212 can send a set of tiles adjacent to those already available in the cache 220, and the mapping application 210 can rebuild the search index using the already-stored tiles and the new tiles to cover the additional area in addition to the original area.

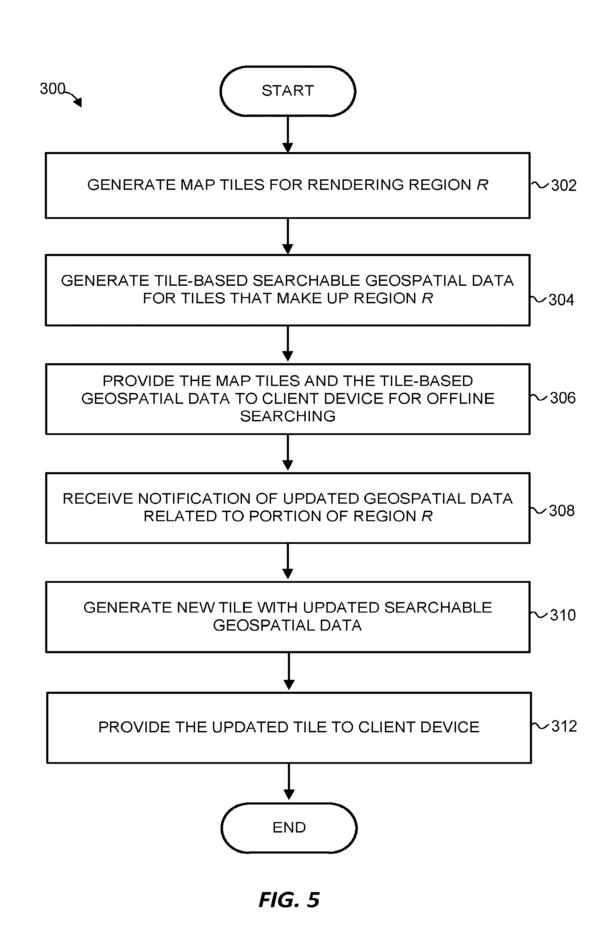

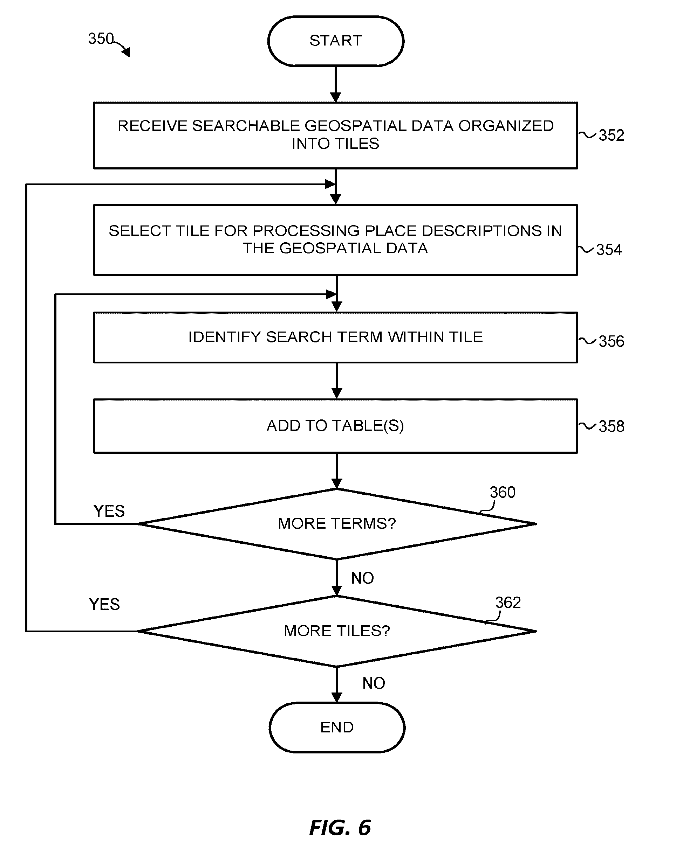

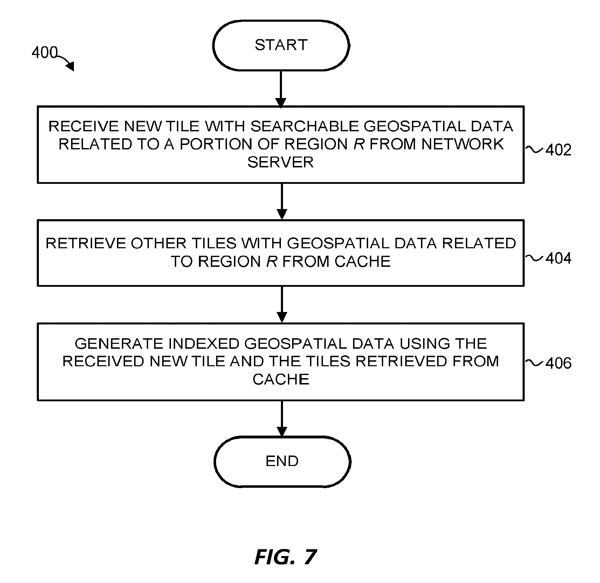

Several example methods that can be implemented in the system of Fig. 1 are discussed next. Each of these methods can be implemented as software instructions executed on one or more processors. The method of Fig. 5 can be implemented in one or more network servers, such as the network server 12, for example. The methods of Figs. 6 and 7 can be implemented in the client device 14 or a similar user device. It will be understood that the steps of the flow diagrams in Figs. 5 - 7 are merely exemplary and in some implementations, be reordered, repeated, removed, supplemented, otherwise altered, or any combination thereof as needed.

Fig. 5 illustrates example method 300 for providing searchable geospatial data to a client device. At least blocks 306 and 312 are executed when the client device is operating in the online mode, while the other blocks of the method 300 can be executed when the client device operates either in the online mode or in the offline mode. The method 300 begins at block 302, where a set of map tiles for rendering a digital map of a geographic region R is generated. Depending on the implementation and/or scenario, the set of map tiles can be generated in response to a user request, a request automatically generated at a client device, a request automatically generated at the network server, or any combination thereof. Next, at block 304, searchable geospatial data is generated as a set of tiles for the same region R. The tiles enclosing geospatial data generally need not correspond to the same zoom level as the map tiles generated at block 302, nor does the number of tiles with geospatial data need to be the same as the number of map tiles. However, in at least some of the embodiments, both map tiles and geospatial data tiles cover the same geographic area to improve user experience.

The flow then proceeds to block 306, where the map tiles and the tiles with geospatial data are provided to a client device. The geospatial data is formatted so as to enable indexing and subsequent searching at the client device.

At block 308, a change in geospatial data corresponding to one of the tiles previously provided to the client device is detected. The detection at block 308 can be triggered by a request for relevant updates received from a client device, where the request indicates current versions of tiles cached at the client device, for example. To prevent the client device from generating incorrect search results in the offline mode, a new tile with searchable geospatial content for the relevant tile is generated (block 310) and provided to the client device (block 312). Using the updated tile and some of the previously cached tiles, the client device can rebuild the search index. The method 300 completes after executing block 312.

Fig. 6 is a flow diagram of an example method 350 for generating indexed geospatial data using tile-based geospatial data received from a network server, which can be implemented in the client device 14. The method begins at block 352, where searchable geospatial data is received. To send the geospatial data to the client device, the network server has organized the searchable geospatial data into N geospatial data tiles. The map tiles for rendering a digital map of the corresponding geographic area can have a *N-*to*-N* relationship with the geospatial data tiles or *M*-to-*N*, depending on the implementation. The method 350 then proceeds to processing the received tiles to generate indexed geospatial data, or a search index.

In particular, a next tile in the received set of geospatial data tiles is selected at block 354. The content within the tile is parsed and a search term, such as "nightlife," is identified at block 356. The search term, as well as an indication of a geographic entity that includes the term and the location of the geographic entity, can be added to one or several tables at block 358. For example, the method 350 can continue to populate a table similar to the Table 1 discussed above. If additional terms are available (block 360), the flow returns to block 356. Otherwise, if all search terms within the tile have been processed, the flow proceeds to block 362. When every relevant tile has been processed, the method 350 completes. Otherwise, the flow returns to block 354, where a new tile is selected.

More generally, tile-based geospatial data can be processed in any suitable manner. For example, in an additional or alternative implementation, multiple tiles are first merged into a temporary shared data structure, which is then parsed and indexed with a single pass.

Now referring to Fig. 7, an example method 400 can be executed to re-generate indexed geospatial data using a tile with updated geospatial data and some of the previously cached tiles. The method 400 begins at block 402, where a new tile with searchable geospatial data is received from a network server. The new tile is received along with an identifier of the position of the tile within a tile grid or another suitable position indicator, so that the client device can identify which of the previously cached tiles is being updated.

At block 404, other tiles that were used to generate indexed geospatial data for region R are retrieved from cache. At block 406, new indexed geospatial data is generated using some of the previously cached tiles and the new tile. Further, the older version of the tile received at block 402 is identified and replaced with the new tile in cache.

### Additional Considerations

The following additional considerations apply to the foregoing discussion. Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A hardware module is tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of various embodiments. This description should be read to include one or at least one and the singular also includes the plural unless it is obvious that it is meant otherwise.

Upon reading this disclosure, those of ordinary skill in the art will appreciate still additional alternative structural and functional designs for a system and a process for providing tiled-based geospatial data to client devices through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the scope defined in the appended claims.

## Claims

1. A method in a user device, the method comprising:
receiving, by one or more processors via a communication network, searchable geospatial data organized into a plurality of tiles, wherein each tile in the plurality of tiles corresponds to a respective portion of a geographic area of a substantially same size, wherein the searchable geospatial data includes, for each tile in the plurality of tiles, descriptions of one or more geographic entities within the corresponding portion of the geographic area and a location of each of the one or more geographic entities within the corresponding portions of the geographic area;
indexing, by the one or more processors, the geospatial data using the descriptions of the geographic entities and the locations included in the plurality of tiles to generate indexed geospatial data;
storing, by the one or more processors, the indexed geospatial data in a cache implemented in the user device; and
executing a query related to the geographic area using the indexed geospatial data stored in the cache.

2. The method of claim 1, wherein the descriptions of geographic entities include, for each geographic entity, an indication to which of a plurality of searchable terms the geographic entity corresponds.

3. The method of claim 2, wherein indexing the searchable geospatial data includes generating, by the one or more processors, common keys for geographic entities for which the searchable indicates one or more searchable terms.

4. The method of claim 2 or 3, wherein the plurality of searchable terms include business type identifiers.

5. The method of any one of the preceding claims, further comprising:
receiving, by the one or more processors via a user interface, a geographic search query including one or more of the plurality of search terms, and
executing the geographic query based on the received one or more of the plurality of searchable terms.

6. The method of any of the preceding claims, wherein executing the query related to the geographic area using the indexed geospatial data stored in the cache includes executing the query when the user device operates in an offline mode.

7. The method of any one of the preceding claims, further comprising:
receiving updated geospatial data for one of the plurality of tile from the map data server;
re-indexing the geospatial data using the updated geospatial data and the geospatial data corresponding to the remaining ones of the plurality of tiles.

8. The method of any one of the preceding claims, further comprising:
receiving, by the one or more processors via the communication network, map data for rendering a digital map of the geographic area, wherein the map data is organized into map tiles having same dimensions as the tiles into which the searchable geospatial data is organized; and
storing, by the one or more processors, the map data in the cache.

9. The method of any one of the preceding claims, wherein the tiles into which the searchable geospatial data is organized correspond to a first zoom level; the method further comprising:
receiving, by the one or more processors via the communication network, map data for rendering a digital map of the geographic area, wherein the map data is organized into map tiles corresponding to second zoom level different from the first zoom level; and
storing, by the one or more processors, the map data in the cache.

10. A user device comprising:
a user interface;
a network interface to couple the user device to a map data server via a communication network, in an online mode;
a non-transitory computer-readable memory storing thereon computer executable instructions that when executed by a computer will cause the computer to carry out a method according to any one of the preceding claims.
